# EUROPEAN PATENT APPLICATION

(11) **EP 3 070 052 A1**
(43) Date of publication of application: **21.09.2016**
(21) Application number: 16161209.8
(22) Date of filing: 18.03.2016
(51) Int. Cl.: C01B 21/072

(54) **APPARATUS AND METHOD FOR PRODUCING ALUMINUM NITRIDE POWDER AND ALUMINUM NITRIDE POWDER PREPARED THEREBY**

(30) Priority: 20.03.2015 KR 20150039166
(71) Applicant: OCI Company Ltd., Seoul 100-718 (KR)
(72) Inventor: KOO, Jae-Hong, 462-807 Gyeonggi-do (KR); CHUNG, Yong-Kwon, 462-807 Gyeonggi-do (KR); KIM, Shin-A, 462-807 Gyeonggi-do (KR); CHI, Eun-Ok, 462-807 Gyeonggi-do (KR)
(74) Representative: Awapatent AB

(57) **Abstract**

Disclosed herein are an apparatus and a method for producing aluminum nitride powder, and aluminum nitride powder prepared thereby. The apparatus for producing aluminum nitride powder includes: a vertical reactor including an aluminum source supplier for supplying aluminum source and a nitrogen source supplier for supplying nitrogen source, the vertical reactor causing chemical vapor reaction between the aluminum source and the nitrogen source supplied therein; a trap device including a membrane for passing resulting products from the reaction; and a bubbling device for capturing the products having passed through the trap device.

## Description

### BACKGROUND

### 1. Technical Field

The present disclosure relates to an apparatus and method for producing aluminum nitride powder, and aluminum nitride powder prepared thereby.

### 2. Description of the Related Art

Aluminum nitride is a ceramic material that exists as white powder having Wurtzite crystal structure. Aluminum nitride decomposes into aluminum gas and nitrogen gas under the atmospheric pressure and at the 2,500°C. Pure aluminum nitride powder is white, but aluminum nitride containing carbon impurities is often light gray.

The thermal conductivity of the aluminum nitride in principle is 319 W/mK. Accordingly, it is a ceramic material having the thermal conductivity more than ten times that of alumina. Sintered aluminum nitride exhibits a thermal conductivity of approximately 70 to 210 W/mK. Single crystal of aluminum nitride exhibits a thermal conductivity of approximately 285 W/mK. In addition, aluminum nitride has good electrical insulation property (1014 Ωm), stable coefficient of thermal expansion (4 × 10⁻⁶ / K), strong mechanical properties (430 MPa). In particular, the coefficient of thermal expansion is less than that of alumina and similar to that of Si semiconductor, and thus aluminum nitride is applicable to semiconductor industries. Based on such properties, aluminum nitride has been widely applied as substrates, components, modules for semiconductor since late 1980's, which requires ceramics having high thermal conductivity.

Methods for producing aluminum nitride may be largely divided into the carbothermal reduction reaction, direct nitration, chemical vapor synthesis, plasma synthesis, etc.

### SUMMARY

It is an aspect of the present disclosure to provide an apparatus for producing aluminum nitride powder, including: a vertical reactor including an aluminum source supplier for supplying aluminum source and a nitrogen source supplier for supplying nitrogen source, the vertical reactor causing chemical vapor reaction between the aluminum source and the nitrogen source supplied therein; a trap device including a membrane for passing resulting products from the reaction; and a bubbling device for capturing the products having passed through the trap device.

It should be noted that objects of the present disclosure are not limited to the above-mentioned object; and other objects of the present disclosure will be apparent to those skilled in the art from the following descriptions.

In accordance with one aspect of the present disclosure, an apparatus for producing aluminum nitride powder includes: a vertical reactor including an aluminum source supplier for supplying aluminum source and a nitrogen source supplier for supplying nitrogen source, the vertical reactor causing chemical vapor reaction between the aluminum source and the nitrogen source supplied therein; a trap device including a membrane for passing resulting products from the reaction; and a bubbling device for capturing the products having passed through the trap device.

The aluminum source supplier may be located lower than the nitrogen source supplier in a vertical direction of the vertical reactor.

The aluminum source supplier may be connected via a double nozzle.

The double nozzle may include an external nozzle for supplying carrier gas and an internal nozzle for supplying the aluminum source.

A ratio of an inner diameter of the outer nozzle to an inner diameter of the inner nozzle may range from 4 : 1 to 20 : 1.

The aluminum source supplier may be disposed in a heating section of the vertical reactor.

The aluminum source supplier may be disposed at a position between one-sixth and half of a length of the vertical reactor from its top.

The nitrogen source supplier may be disposed at the top of the vertical reactor.

The apparatus may further include a canister for supplying gaseous raw aluminum at a previous stage of the vertical reactor.

The apparatus may include further include a reactor for recrystallizing the captured products at a subsequent stage of the bubbling device.

In accordance with another aspect of the present disclosure, a method for producing aluminum nitride powder includes: (a) supplying, by an aluminum source supplier, aluminum source into a vertical reactor, supplying, by a nitrogen source supplier, nitrogen source into the vertical reactor, and causing chemical vapor reaction between them; (b) passing products from the reaction through a trap device including a membrane; and (c) capturing, by a bubbling device, the products having passed through the trap device.

In step (a), the aluminum source supplier may be located lower than the nitrogen source supplier in a vertical direction of the vertical reactor.

In step (a), the aluminum source supplier may be connected via a double nozzle.

The double nozzle may include an external nozzle for supplying carrier gas and an internal nozzle for supplying the aluminum source.

A flow rate of the carrier gas in the outer nozzle may be 1.1 times to 3 times a flow rate of the aluminum source in the inner nozzle.

A linear velocity of the carrier gas in the outer nozzle may be 1.1 times to 3 times a linear velocity of the aluminum source in the inner nozzle.

In step (a), the reaction may take place at atmospheric pressure and a temperature between 800°C and 1,400°C.

In step (a), the aluminum source may be supplied from the canister in gaseous phase.

The method may further include recrystallizing the captured products at a temperature between 500°C and 1,500°C.

In accordance with another aspect of the present disclosure, there is provided aluminum nitride powder produced according to the above-described method.

According to an exemplary embodiment of the present disclosure, nanoscale aluminum nitride powder having uniform particle size and 100% hexagonal system crystallography can be produced, with high purity and high yield.

### BRIEF DESCRIPTION OF DRAWINGS

FIG. 1 is a schematic cross-sectional view of an apparatus for producing aluminum nitride powder according to an exemplary embodiment of the present disclosure;
FIG. 2 is a lateral cross-sectional view of the double nozzle according to an exemplary embodiment of the present disclosure;
FIGS. 3A to 3C are a longitudinal cross-sectional views of the double nozzle according to an exemplary embodiment of the present disclosure;
FIGS. 4A and 4B are photographs of aluminum nitride powder produced by the method according to Example 1 taken by a SEM, magnified by factors of 200,000 and 100,000, respectively;
FIG. 5 is a graph showing results of analysis of aluminum nitride powder produced by the method according to Example 1 with an XRD analyzer; and
FIG. 6 is a graph showing results of analysis of aluminum nitride powder produced by the method according to Example 1 with a PSA.

### DETAILED DESCRIPTION

In the following detailed description, reference is made to the accompanying drawings that show, by way of illustration, specific embodiments in which the invention may be practiced. These embodiments are described in sufficient detail to enable those skilled in the art to practice the invention. It is to be understood that the example embodiments are not limiting and the present disclosure may be implemented in different ways.

Hereinafter, exemplary embodiments of the present disclosure will be described in detail.

### Apparatus for Producing Aluminum Nitride Powder

According to an exemplary embodiment of the present disclosure, an apparatus for producing aluminum nitride powder includes: a vertical reactor including an aluminum source supplier for supplying aluminum source and a nitrogen source supplier for supplying nitrogen source, the vertical reactor causing chemical vapor reaction between the aluminum source and the nitrogen source supplied therein; a trap device including a membrane for passing resulting products from the reaction; and a bubbling device for capturing the products having passed through the trap device. The aluminum source supplier may be connected via a double nozzle.

The apparatus may further include a canister for supplying gaseous raw aluminum at the previous stage of the vertical reactor. The apparatus may include further include a reactor for recrystallizing the captured products at a subsequent stage of the bubbling device.

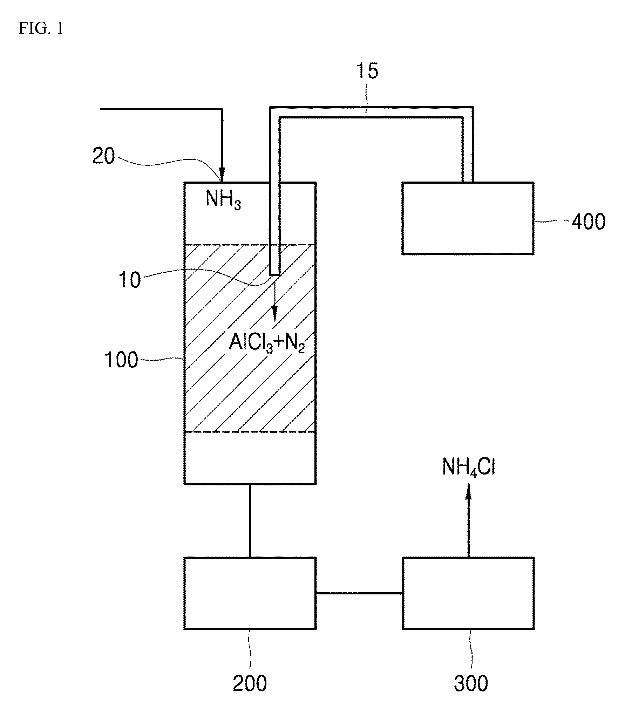

FIG. 1 is a schematic cross-sectional view of an apparatus for producing aluminum nitride powder according to an exemplary embodiment of the present disclosure.

Referring to FIG. 1, an apparatus for producing aluminum nitride powder according to the exemplary embodiment of the present disclosure may include: a vertical reactor 100 including an aluminum source supplier 10 for supplying aluminum source and a nitrogen source supplier 20 for supplying nitrogen source, and causing chemical vapor reaction between the aluminum and nitride supplied; a trap device 200 including a membrane for passing products from the reaction therethrough; and a bubbling device 300 for capturing the products having passed through the trap device 200. The aluminum source supplier 10 may be connected via a double nozzle 15.

A canister 400 for supplying gaseous aluminum source may be additionally disposed at the previous stage of the vertical reactor 100. A reactor (not shown) for recrystallizing the captured products may be additionally disposed at the subsequent stage of the bubbling device 300.

Initially, the apparatus for producing aluminum nitride powder according to the exemplary embodiment of the present disclosure includes the vertical reactor 100 that has the aluminum source supplier 10 for supplying aluminum source and the nitrogen source supplier 20 for supplying nitrogen source and causing chemical vapor reaction between the aluminum source and the nitrogen source supplied therein.

In the vertical rector 100, chemical vapor reaction between the aluminum source and the nitrogen source supplied therein takes place.

The formula for the chemical vapor reaction is as follows:

AlCl₃ + NH₃ → AlN + 3HCl(+NH₄Cl).

The chemical vapor reaction can give nanoscale particles of aluminum nitride power with even size and high purity, unlike the existing methods. In addition, the chemical vapor reaction can take place much faster than the carbothermal reduction reaction and can exhibit high productivity via continuous processes.

Unfortunately, it is not easy to produce nanoscale aluminum nitride powder by the chemical vapor reaction at the final stage. This is because the produced nanoscale aluminum nitride powder may be blown away since the flow rate (linear velocity) of the gas is very high. In addition, it is also not easy to remove NH₄Cl that is by-products from the chemical vapor reaction.

In a typical horizontal reactor, the time period for which products stay in a heating section thereof differs depending on the reaction time. Accordingly, the sizes of the particles of aluminum nitride powder are not even, and the crystallinity distribution is not uniform.

In contrast, according to an exemplary embodiment of the present disclosure, it is essential to employ the vertical reactor 100 so that the products stay for an equal time period. By doing so, the resulting aluminum nitride powder has uniform particle size and uniform crystallinity distribution.

Specifically, a reactant is supplied from the top of the vertical reactor 100, reacts in a heating section of the vertical reactor 100, and then products are produced at the bottom of the vertical reactor 100. The vertical reactor 100 may be made of quartz and may have various shapes such as a tube, a cylinder, etc.

The aluminum source supplier 10 may be located lower than the nitrogen source supplier 20 in the vertical direction of the vertical reactor 100.

The aluminum source supplier 10 is to supply aluminum source. The aluminum source includes aluminum, preferably AlCl₃.

Specifically, the aluminum source supplier 10 may be located in a heating section (the hatched portion) of the vertical reactor 100. The heating section of the vertical reactor 100 refers to the portion where the chemical vapor reaction between the aluminum source and the nitrogen source supplied therein takes place. The temperature of the heating section is maintained between 800°C and 1,400°C.

Specifically, the aluminum source supplier 10 is preferably located at a position between one-sixth and the half of the length of the vertical reactor 100 from the top, for example.

As a result, the aluminum source decomposes into monomers, and the monomers are supplied. Accordingly, it is possible to prevent aluminum nitride from being coated on an upper portion of the vertical reactor 100, e.g., on an inner surface of a position between the top and one-sixth of the length of the vertical reactor 100. In addition, it is also possible to prevent the quartz of the vertical reactor 100 from being easily broken due to the difference in coefficients of thermal expansion between the aluminum nitride and quartz.

If the aluminum source is supplied directly from the top of the vertical reactor 100 without the double nozzle like nitrogen source, the chemical vapor reaction between the aluminum source and the nitrogen source would take place at a temperature below 600°C incompletely, rather than in the heating section of the vertical reactor 100. That is, the aluminum source would fail to decompose into monomers completely and react with the nitrogen source. As a result, the aluminum nitride would be coated onto the inner surface of an upper portion of the vertical reactor 100. In addition, the quartz of the vertical reactor 100 would be easily broken due to the difference in coefficients of thermal expansion between the aluminum nitride and quartz.

The aluminum source supplier 10 may be connected via the double nozzle 15. The double nozzle 15 may include an outer nozzle for supplying carrier gas and an inner nozzle for supplying the aluminum source.

The outer nozzle of the double nozzle 15 supplies carrier gas, and the carrier gas is preferably N2. By supplying the carrier gas, it is possible to prevent products of the reaction from being generated at the end of the double nozzle 15. As a result, the yield of the aluminum nitride can be effectively increased. The inner nozzle of the double nozzle 15 supplies aluminum source.

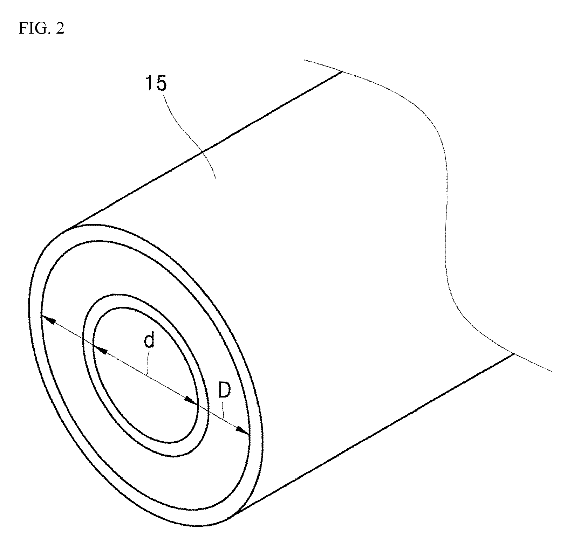

FIG. 2 is a lateral cross-sectional view of the double nozzle according to an exemplary embodiment of the present disclosure.

Referring to FIG. 2, the inner diameter of the outer nozzle is indicated by D, and the inner diameter of the inner nozzle is indicated by d.

Preferably, the ratio of the inner diameter of the outer nozzle to the inner diameter of the inner nozzle is from 1.5 : 1 to 20 : 1. With the ratio of the inner diameter of the outer nozzle to the inner diameter of the inner nozzle within the above range, it is possible to prevent products of the reaction from being generated at the end of the double nozzle 15. As a result, the yield of the aluminum nitride can be effectively increased.

Specifically, the inner diameter of the outer nozzle may range from 1.5 mm to 20 mm, and the inner diameter of the inner nozzle may range from 1 mm to 10 mm.

Preferably, the aluminum source supplier 10 (or the end of the double nozzle 15) is spaced apart from the walls of the vertical reactor 100 by at least 5 cm. More preferably, the aluminum source supplier 10 is located in the center of the inner diameter of the vertical reactor 100. By doing so, it is possible to prevent aluminum nitride from being coated onto the inner surface of the vertical reactor 100. In addition, it is possible to prevent the quartz of the vertical reactor 100 is easily broken due to the difference in coefficients of thermal expansion between the aluminum nitride and quartz.

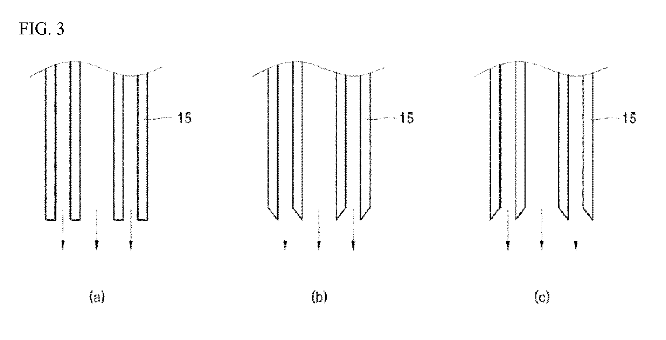

FIGS. 3A to 3C are a longitudinal cross-sectional views of the double nozzle according to an exemplary embodiment of the present disclosure.

FIG. 3A shows an example of the double nozzle having flat ends of the outer nozzle and inner nozzle. FIG. 3B shows an example of the double nozzle having inwardly-tapering ends of the outer nozzle and inner nozzle. FIG. 3C shows an example of the double nozzle having outwardly-tapering ends of the outer nozzle and inner nozzle.

The nitrogen source supplier 20 is to supply nitrogen source. The nitrogen source includes nitride, preferably NH₃. Excessive nitrogen, i.e., more than an equivalent of nitrogen is supplied in order to increase the yield of aluminum nitride powder. Preferably, the supplied nitrogen source is twice to ten times an equivalent, more preferably eight to ten times an equivalent.

The nitrogen source supplier 20 may be located at the top of the vertical reactor 100.

Unlike the supply of the aluminum source, no additional double nozzle is used for the supply of the nitrogen source. The nitrogen source may be supplied directly into the vertical reactor 100 from the top.

If the nitrogen source is supplied into the vertical reactor 100 via a double nozzle like the aluminum source, NH₃ begins to decompose into N2 and H2 already at ends of the double nozzle, such that the amount of NN₃ becomes below an equivalent for the chemical vapor reaction. As a result, the yield is significantly reduced.

The apparatus for producing aluminum nitride powder according to an exemplary embodiment of the present disclosure further includes the trap device 200 including a membrane for passing products from the reaction therethrough.

The trap device 200 may be disposed at the subsequent stage of the vertical reactor 100. The trap device 200 may allow products containing aluminum nitride from the reaction to pass through it, and may continuously capture products containing ammonium chloride from the reaction to remove them.

Although the trap device 200 may work with a single-phase membrane to capture and remove the products containing ammonium chloride, the trap device 200 may also include a multi-phase membrane for more effectively capture and remove the products containing ammonium chloride. By capturing and removing by-products such as the products containing ammonium chloride, it is possible to produce nanoscale aluminum nitride having uniform particle size and 100% hexagonal system crystallography, with high purity and high yield.

In addition, the apparatus for producing aluminum nitride powder according to the exemplary embodiment of the present disclosure further includes the bubbling device 300 for capturing products having passed through the trap device 200.

The products having passed through the trap device 200 are supplied into the bubbling device 300, such that the bubbling device 300 captures the products containing aluminum nitride. By-products, i.e., products containing ammonium chloride are vaporized into the atmosphere, such that the products containing aluminum nitride can be extremely effectively captured. Nonetheless, there may be impurities in the products containing the aluminum nitride captured by the bubbling device 300. In this regard, ethanol may be used for bubbling. The ethanol may be, preferably but is not limited to, anhydrous ethanol.

By disposing a filter and a vacuum pump in this order at the subsequent stage of the bubbling device 300, it is possible to reduce the pressure inside the vertical reactor 100 to approximately 0.5 atmospheric pressure. Accordingly, capturing the products containing aluminum nitride can be facilitated. As a result, missing in capturing the products containing aluminum nitride can be minimized, and thus the yield can be even increased.

Optionally, the apparatus for producing aluminum nitride powder according to the exemplary embodiment of the present disclosure may further include a canister 400 for supplying gaseous aluminum source at the previous stage of the vertical reactor 100.

The gaseous aluminum source may be stored in the canister 400 and may be supplied to the double nozzle 15. Specifically, the aluminum source contains aluminum, preferably AlCl₃. For example, since the sublimation temperature of AlCl₃ is about 178°C, AlCl₃ in a globe box may be introduced into the canister 400, and AlCl₃ may be vaporized at a temperature higher than the sublimation temperature, e.g., 190 to 200°C by a heating mantle surrounding the canister 400. The amount of the vaporized AlCl₃ may be calculated by a load cell attached to the canister 400.

In doing so, the aluminum source is processed in the globe box and attention has to be paid not to expose it to moisture in the air.

The apparatus for producing aluminum nitride powder according to the exemplary embodiment of the present disclosure may further include a reactor (not shown) for recrystallizing the captured products at the subsequent stage of the bubbling device 300. Accordingly, recrystallizing the captured products containing aluminum nitride at a temperature between 500°C and 1,500°C may be further performed. By further performing the recrystallizing at a temperature within the above range, crystallinity can be increased.

In doing so, the captured products for recrystallizing is processed in the globe box and attention has to be paid not to expose the aluminum nitride powder to moisture in the air.

### Method for Producing Aluminum Nitride Powder

According to an exemplary embodiment of the present disclosure, a method for producing aluminum nitride powder includes: (a) supplying, by an aluminum source supplier, aluminum source into a vertical reactor, supplying, by a nitrogen source supplier, nitrogen source into the vertical reactor, and causing chemical vapor reaction between them; (b) passing products from the reaction through a trap device including a membrane; and (c) capturing, by a bubbling device, the products having passed through the trap device.

The method for producing aluminum nitride powder may be performed by the above-described apparatus.

The method for producing aluminum nitride powder includes supplying aluminum source by an aluminum source supplier into a vertical reactor, supplying nitrogen source by a nitrogen source supplier into the vertical reactor, and causing chemical vapor reaction between them (step (a)).

The aluminum source supplier may be located lower than the nitrogen source supplier in the vertical direction of the vertical reactor.

The aluminum source supplier may be connected via a double nozzle. The double nozzle may include an external nozzle for supplying carrier gas and an internal nozzle for supplying the aluminum source.

Specifically, the flow rate of the carrier gas in the outer nozzle is, preferably but is not limited to, 1.1 times to 3 times the flow rate of the aluminum source in the inner nozzle. Specifically, the linear velocity of the carrier gas in the outer nozzle is also, preferably but is not limited to, 1.1 times to 3 times the linear velocity of the aluminum source in the inner nozzle. If the flow rate or linear velocity of the carrier gas in the outer nozzle is less than 1.1 times the flow rate or the linear velocity of the aluminum source in the inner nozzle, the aluminum source and the nitrogen source may meet each other in the inner nozzle, such that products may be generated at the ends of the double nozzle. As a result, the double nozzle may be blocked. If the flow rate or linear velocity of the carrier gas in the outer nozzle is greater than 2 times the flow rate or the linear velocity of the aluminum source in the inner nozzle, the overall flow rates of gases in the vertical reactor become large, such that the trap device disposed at the subsequent stage of the vertical reactor is more likely to miss the products in capturing them.

The reaction takes place, preferably but is not limited to, at the atmospheric pressure and a temperature between 800°C and 1,400°C. As the reaction takes place at the atmospheric pressure, it is advantageous in that the vertical reactor need not be in vacuum state. In addition, as the chemical vapor reaction takes place at a temperature within the above range, nanoscale aluminum nitride powder with uniform particle size can be produced with high purity and high yield.

The aluminum source may be supplied from the canister in gaseous phase.

Subsequently, the method includes passing products from the reaction through the trap device including a membrane (step b); and capturing the products having passed through the trap device by the bubbling device (step c).

Optionally, the method may further include recrystallizing the captured products at a temperature between 500°C and 1,500°C (step d).

By further performing the recrystallizing at a temperature within the above range, crystallinity can be increased. In doing so, the recrystallizing is processed in a globe box and attention has to be paid not to expose the aluminum nitride powder to moisture in the air.

### Aluminum Nitride Powder

An exemplary embodiment of the present disclosure also provides aluminum nitride powder produced according to the above-described method.

The aluminum nitride powder may be divided into primary particles and secondary particles that are formed as some of the primary particles stick together. The average size of the primary particles ranges from 10 to 20 nm, and the average size of the secondary particles ranges from 100 to 300 nm.

That is, the average size of the particles of the aluminum nitride powder is, preferably but is not limited to, 10 nm to 300 nm.

As used herein, "the average size of particles" may refer to the distance between two points defined as the straight line passing through the center of mass of a particle meets surfaces of the particle.

The average diameter or thickness of particles may be measured by any of various known methods. For example, the particles may be analyzed based on a photograph taken by a scanning electron microscope (SEM).

If the aluminum nitride powder is analyzed with a particle size analyzer (PSA), it is preferably that 10 nm < D50 < 300 nm, and more preferably 100 nm < D50 < 300 nm, where D50 denotes a diameter of 50% cumulative mass particle size distribution in the particle distribution of the aluminum nitride powder.

Such nanoscale aluminum nitride powder with uniform particle size can be obtained by employing the vertical reactor so that the products stay for an equal time period.

In addition, the aluminum nitride powder may have a hexagonal system crystallography, preferably but is not limited to 100% hexagonal system crystallography.

According to an exemplary embodiment of the present disclosure, nanoscale aluminum nitride powder having uniform particle size and 100% hexagonal system crystallography can be produced, with high purity and high yield.

Hereinafter, examples of the present disclosure will be introduced to facilitate understanding the present disclosure. It is to be noted that the examples are merely illustrative and are not intended to limit the present disclosure.

### [Examples]

### Example 1

160g of AlCl₃ with the purity of 99.92% (available from Neoindus Inc.) was introduced into a canister and was vaporized by a heating mantle at the temperature of 200°C. Subsequently, AlCl₃ was supplied via a double nozzle made of SUS material from an aluminum source supplier in a vertical quartz reactor (inner diameter: 150 mm, height: 1,000 mm).The aluminum source supplier is located at one-third of the length of the vertical quartz reactor from its top. At the same time, excessive nitrogen of 6N NH₃ was directly supplied from a nitrogen source supplier (located at the top of the vertical quartz reactor) at 480 ml/min. Subsequently, chemical vapor reaction took place at the temperature of 1,000°C and atmospheric pressure.

At this time, 6N N₂ was supplied at 6.6 L/min and 4 m/s as the carrier gas via the outer nozzle (inner diameter: 10 mm) of the double nozzle. In addition, AlCl₃ was supplied at 3.3 L/min and 2 m/s via the inner nozzle (inner diameter: 6 mm and outer diameter: 8 mm).

Consecutively, products containing NH₄Cl from the reaction were captured by a two-phase trap device including two-phase membrane. After having passed the two-phase trap device, the products containing NH₄Cl was supplied into a two-phase ethanol bubbling device. Products containing AlN were captured by the two-phase ethanol bubbling device, and products containing NH₄Cl were vaporized to the air. Subsequently, additional heating is formed at 1,000°C, finally producing aluminum nitride powder. The final yield of the aluminum nitride powder was 80.8%.

### Example 2

The aluminum nitride powder was produced in the same manner as Example 1 except for that 6N N₂ was supplied at 9.9 L/min and 6 m/s as the carrier gas via the outer nozzle (inner diameter: 10 mm) of the double nozzle and AlCl₃ was supplied at 4.95 L/min and 3 m/s via the inner nozzle (inner diameter: 6 mm, outer diameter: 8 mm). The final yield of the aluminum nitride powder was 62.0%.

### Comparative Example 1

The aluminum nitride powder was produced in the same manner as Example 1 except for that AlCl₃ was supplied from the top of the vertical quartz reactor with no double nozzle like NH₃. The final yield of the aluminum nitride powder was 10.0% or less.

### Comparative Example 2

The aluminum nitride powder was produced in the same manner as Example 1 except for that NH₃ was supplied via a double nozzle located at one-third of the length of the vertical quartz reactor from its top, like AlCl₃. The final yield of the aluminum nitride powder was 50.0% or less.

### Comparative Example 3

The aluminum nitride powder was produced in the same manner as Example 1 except for that AlCl₃ was supplied from the top of the vertical quartz reactor with no double nozzle and NH₃ was supplied via a double nozzle located at one-third of the length of the vertical quartz reactor from its top. The final yield of the aluminum nitride powder was 40.0% or less.

### Experimental Example

### (1) Analysis by SEM

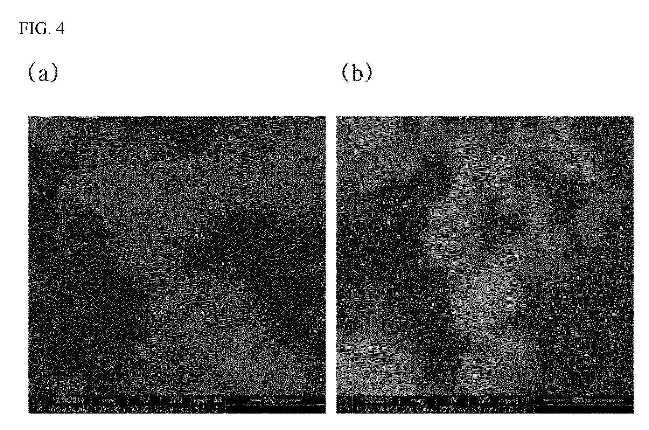

The aluminum nitride powder produced by the method according to Example 1 was observed with a SEM. Results of the observation are shown in FIGS. 4A and 4B.

As can be seen from FIGS. 4A and 4B, the aluminum nitride powder may be divided into primary particles and secondary particles that are formed as some of the primary particles stick together. The average size of the primary particles ranges from 10 to 20 nm, and the average size of the secondary particles ranges from 100 to 300 nm.

That is, the average size of particles of the aluminum nitride powder ranges from 10 to 300 nm, i.e., distribution of particle size was even and nanoscale. This can be achieved by employing the vertical reactor so that the products stay for an equal time period in the chemical vapor reaction.

### (2) Analysis Using X-Ray Diffraction (XRD)

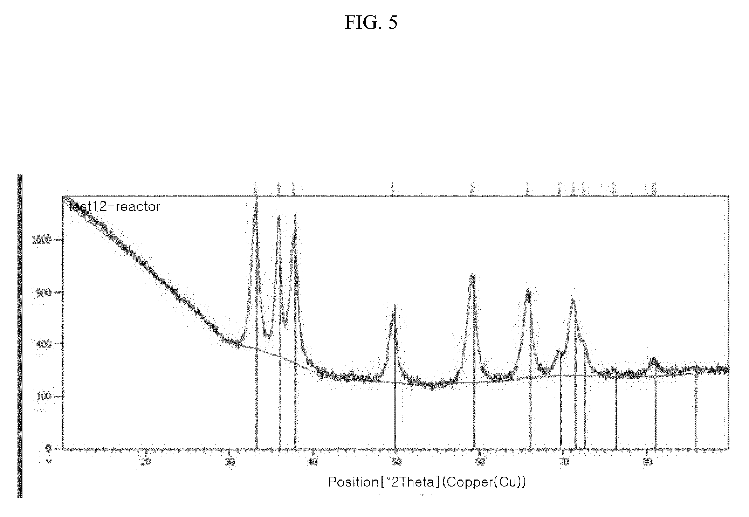

The aluminum nitride powder produced by the method according to Example 1 was analyzed with an X-ray diffraction (XRD) analyzer. Results of the analysis are shown in FIG. 5.

As can be seen from FIG. 5, the aluminum nitride powder had 100% hexagonal system crystallography.

### (3) Analysis Using PSA

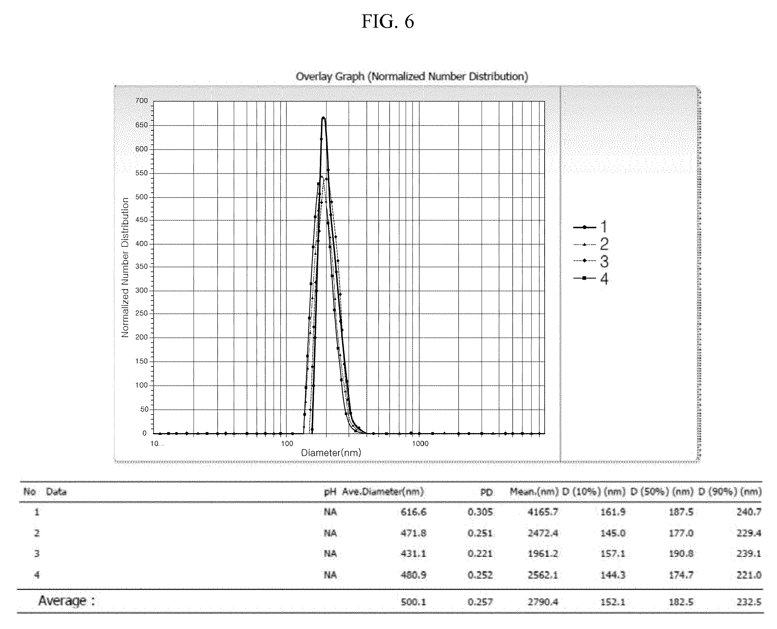

The aluminum nitride powder produced by the method according to Example 1 was analyzed with a PSA four times. Results of the observation are shown in FIG. 6.

As can be seen from FIG. 6, D50 = 182.5 nm where D50 denotes a diameter of 50% cumulative mass particle size distribution in the particle distribution of the aluminum nitride powder. These results are similar to the results of the secondary particles that were analyzed by the SEM.

### (4) Metal Impurity Analysis

The content of metal impurities contained in the aluminum nitride powder produced by the method according to Example 1 was analyzed with an ICP-MS system (7500cs available from Agilent Technologies, Inc.). Results of the analysis are shown in Table 1.

**[Table 1]**

| Element | Unit | Test-12 reactor |
|---|---|---|
| B | ppm | <0.5 |
| Na | ppm | <0.5 |
| Mg | ppm | <1.0 |
| K | ppm | 1.5 |
| Ca | ppm | <1.0 |
| Sc | ppm | <0.5 |
| Ti | ppm | <0.5 |
| V | ppm | <0.5 |
| Cr | ppm | 18 |
| Mn | ppm | 0.8 |
| Fe | ppm | 71 |
| Ni | ppm | <0.5 |
| Cu | ppm | <0.5 |
| Zn | ppm | <0.5 |
| Ga | ppm | <0.5 |
| Ge | ppm | <0.5 |
| Se | ppm | <0.5 |
| Y | ppm | <0.5 |
| Zr | ppm | <0.5 |
| Nb | ppm | <0.5 |
| Mo | ppm | <0.5 |
| Ru | ppm | <0.5 |
| Rh | ppm | <0.5 |
| Pd | ppm | <0.5 |
| Ag | ppm | <0.5 |
| Cd | ppm | <0.5 |
| Sn | ppm | <0.5 |
| Hf | ppm | <0.5 |
| Ta | ppm | <0.5 |
| W | ppm | <0.5 |
| Re | ppm | <0.5 |
| Au | ppm | <0.5 |
| Pb | ppm | <0.5 |
| Th | ppm | <0.5 |
| U | ppm | <0.5 |

As can be seen from Table 1, although the amounts of other metal impurities were not significant, only the amount of Fe was relatively high, i.e., 71 ppm. It can be considered that such Fe is from approximately 20 ppm of Fe contained AlCl₃ itself and results from contamination by a spatula or the like used in collecting the aluminum nitride.

### (5) Cl Analysis

The content of Cl contained in the aluminum nitride powder produced by the method according to Example 1 was analyzed by Intertek Corporation, with a Cl analyzer (ICS2000 available from Dinex Inc.) with resolution limit of 30 ppm.

As a result, based on the RT15R-S0412-002 test report, Cl was not detected at all in the aluminum nitride powder. Accordingly, it can be seen that NH₄Cl was completely removed.

### (6) N/O Analysis

The content of N/O contained in the aluminum nitride powder produced by the method according to Example 1 was analyzed with an N/O analyzer (ONH836 available from LECO Corporation).

The results show that 29.6% of N and 3.25% of O were detected. It can be considered that some oxidation is inevitable when it is exposed to the air since the produced aluminum nitride powder is nanoscale.

When AlCl₃ was supplied via the double nozzle located at one-third of the length of the vertical quartz reactor from its top and NH₃ was supplied directly from the top of the vertical quartz reactor with no double nozzle as in Examples 1 and 2, it could be seen that the yield of the produced aluminum nitride powder was significantly increased.

In particular, it could be seen that the aluminum nitride powder produced by the method according to Example 1 has uniform particle size, is nanoscale and has 100% hexagonal system crystallography, with high purity and high yield.

Although the exemplary embodiments of the present disclosure have been described with reference to the accompanying drawings, those skilled in the art would understand that various modifications and alterations may be made without departing from the technical idea or essential features of the present disclosure. Therefore, it should be understood that the above-mentioned embodiments are not limiting but illustrative in all aspects.

## Claims

1. An apparatus for producing aluminum nitride powder comprising:
a vertical reactor including an aluminum source supplier for supplying aluminum source and a nitrogen source supplier for supplying nitrogen source, the vertical reactor causing chemical vapor reaction between the aluminum source and the nitrogen source supplied therein;
a trap device including a membrane for passing resulting products from the reaction; and
a bubbling device for capturing the products having passed through the trap device.

2. The apparatus of claim 1, wherein the aluminum source supplier is located lower than the nitrogen source supplier in a vertical direction of the vertical reactor.

3. The apparatus of claim 1, wherein the aluminum source supplier is connected via a double nozzle,
wherein the double nozzle includes an outer nozzle for supplying carrier gas and an inner nozzle for supplying the aluminum source.

4. The apparatus of claim 3, wherein a ratio of an inner diameter of the outer nozzle to an inner diameter of the inner nozzle ranges from 1.5 : 1 to 2: 1.

5. The apparatus of claim 1, wherein the aluminum source supplier is disposed in a heating section of the vertical reactor.

6. The apparatus of claim 1, wherein the aluminum source supplier is disposed at a position between one-sixth and one-third of a length of the vertical reactor from its top.

7. The apparatus of claim 1, wherein the nitrogen source supplier is disposed at the top of the vertical reactor.

8. The apparatus of claim 1, further comprising: a canister for supplying gaseous aluminum source at a previous stage of the vertical reactor.

9. The apparatus of claim 1, further comprising: a reactor for recrystallizing the captured products at a subsequent stage of the bubbling device.

10. A method for producing aluminum nitride powder, the method comprising:
(a) supplying, by an aluminum source supplier, aluminum source into a vertical reactor, supplying, by a nitrogen source supplier, nitrogen source into the vertical reactor, and causing chemical vapor reaction between them;
(b) passing products from the reaction through a trap device including a membrane; and
(c) capturing, by a bubbling device, the products having passed through the trap device.

11. The method of claim 10, wherein, in step (a), the aluminum source supplier is located lower than the nitrogen source supplier in a vertical direction of the vertical reactor.

12. The method of claim 10, wherein, in step (a), the aluminum source supplier is connected via a double nozzle, wherein the double nozzle includes an outer nozzle for supplying carrier gas and an inner nozzle for supplying the aluminum source.

13. The method of claim 12, wherein a flow rate of carrier gas in the outer nozzle is 1.1 times to 3 times a flow rate of the aluminum source in the inner nozzle, and wherein a linear velocity of carrier gas in the outer nozzle is 1.1 times to 3 times a linear velocity of the aluminum source in the inner nozzle.

14. The method of claim 10, wherein, in step (a), the reaction takes place at atmospheric pressure and a temperature between 800°C and 1,400°C and the aluminum source is supplied from a canister in gaseous phase.

15. The method of claim 10, further comprising: (d) recrystallizing the captured products at a temperature between 500°C and 1,500°C.
